# EUROPEAN PATENT APPLICATION

(11) **EP 4 678 902 A1**
(43) Date of publication of application: **14.01.2026**
(21) Application number: 25186805.5
(22) Date of filing: 01.07.2025
(51) Int. Cl.: F02C 9/40

(54) **METHOD OF SUPPLYING A FUEL TO A COMBUSTOR FOR A TURBINE ENGINE**

(30) Priority: 08.07.2024 US 202418765671
(71) Applicant: General Electric Company, Cincinnati, Ohio 45215 (US)
(72) Inventor: SAMPATH, Karthikeyan, 560066 Bengaluru (IN); NAIK, Pradeep, 560066 Schenectady (IN); PAL, Sibtosh, EVENDALE, 45241 (US); BUCARO, Michael, Evendale, 45241 (US); VISE, Steven, Evendale, 45241 (US); COOPER, Clayton, Evendale, 45241 (US); BENJAMIN, Michael, Evendale, 45241 (US); WICKERSHAM, Andrew, Evendale, 45241 (US); OVERMAN, Nicholas Ryan, Evendale, 45241 (US)
(74) Representative: Openshaw & Co.

(57) **Abstract**

A method of supplying a fuel to a combustor (34, 322, 404, 504) for a turbine engine (10, 400, 500) is disclosed. The method includes supplying a gaseous fuel (Fg) from a gaseous fuel supply (152, 202, 302), supplying an inert gas (Ig) from an inert gas supply (154, 204, 304), and mixing the gaseous fuel with the inert gas to form a mixture (M) of gaseous fuel and inert gas. The mixture is supplied from a fuel injector (32, 210, 312, 410, 512) to the combustor for combustion. The mixing may occur within a mixing manifold (160), a supply line (212), or the fuel injector itself, and may involve impingement between fuel and inert gas streams. The mixture can be homogenous and is optionally combined with air (A) from a swirler assembly (326). The inert gas may be extracted from engine exhaust gases (E) or atmospheric air (508). A controller (164) may be used to actively regulate fuel and inert gas supply based on engine conditions.

## Description

### TECHNICAL FIELD

The present subject matter relates generally to a fuel supply system for a turbine engine for supplying a mixture of fuel and air to a combustor.

### BACKGROUND

A gas turbine engine typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a turbine engine including a combustion section, in accordance with an aspect of the present disclosure.
FIG. 2 is a schematic, cross-sectional view of a combustor with a fuel assembly utilized in the combustion section of FIG. 1 taken along line II-II of FIG. 1, in accordance with an aspect of the present disclosure.
FIG. 3 is a view of a deflector wall of the combustor of FIG. 2, looking in a forward direction and taken along line III-III of FIG. 2, having a set of fuel injectors in annular arrangement, in accordance with an aspect of the present disclosure.
FIG. 4 is a schematic, partial sectional view of the combustor of FIG. 2 showing a fuel supply system including a mixing manifold for providing a mixture of fuel and inert gas to the fuel injector, in accordance with an aspect of the present disclosure.
FIG. 5 is a schematic, partial section view of a combustor that can be utilized within the turbine engine of FIG. 1, showing a fuel supply system with a fuel manifold and an inert gas manifold for providing an unmixed supply of fuel and inert gas to a fuel injector, in accordance with an aspect of the present disclosure.
FIG. 6 is a sectional view of the fuel injector of FIG. 5 having an inert gas passage and a gaseous fuel passage impinging upon one another within the fuel injector, in accordance with an aspect of the present disclosure.
FIG. 7 is a schematic, partial section view of a combustor that can be utilized within the turbine engine of FIG. 1, showing supply of a mixture of fuel and inert gas to a swirler positioned about a fuel nozzle for a fuel injector, in accordance with an aspect of the present disclosure.
FIG. 8 is a schematic view of a turbine engine including a combustion section, in accordance with another aspect of the disclosure.
FIG. 9 is a schematic view of a turbine engine including a combustion section, in accordance with yet another aspect of the present disclosure.
FIG. 10 is a flow chart illustrating a method of supplying a fuel to a combustor, in accordance with an aspect of the present disclosure.

### DETAILED DESCRIPTION

Aspects of the disclosure herein are directed to a fuel supply system located within a turbine engine, and more specifically, to a fuel supply system for providing an inert gas for mixture with a fuel for combustion within the turbine engine. For purposes of illustration, the present disclosure will be described with respect to a fuel supply system providing a supply of fuel, inert gas, or other additives to the combustor for a turbine engine. It will be understood, however, that aspects of the disclosure herein are not so limited and may have general applicability within a turbine engine that combusts a fuel to drive the turbine, as well as in non-aircraft applications or other turbine environments, such as other mobile applications and non-mobile industrial, commercial, and residential applications.

Gaseous fuels, such as hydrogen and non-diluent hydrogen, have faster flame speeds and higher flame temperatures than that of liquid fuels or atomized liquid fuels, which can result in flashback or flame holding along portions of the fuel injector or the surrounding environment. Such flashback or flame holding can impact durability at the fuel injector.

Mixing gaseous fuels with an inert gas can reduce the flame speed. That is, a mixture of gaseous fuel with an inert gas has a slower flame speed than that of the gaseous fuel alone. Utilizing an inert gas mixed with a gaseous fuel supply can reduce flame speeds for combusted fuels, which can reduce flame holding or flashback, thereby increasing durability and lifetime of the fuel injector, combustor, and other surrounding components, while appreciating the emissions benefits of utilizing a gaseous fuel like hydrogen, without requiring a fuel injector specifically adapted for use with hydrogen fuels.

Having a flow of fuel at varying temperatures being fed to the combustion chamber increases the overall momentum of the flow of fuel within the combustion chamber. The increase in momentum, in turn, limits the amount that the flow of fuel within the combustion chamber spreads out. This is especially advantageous for use in the lower power conditions of the turbine engine.

The turbine engine, as describe herein, is especially well adapted for the use of hydrogen fuel (hereinafter, "H2 fuel"). Specifically, the turbine engine is especially well adapted to feed a flow of H2 fuel to the combustion chamber. The flow of H2 fuel can include a gaseous H2 fuel, a liquid H2 fuel, or a combination thereof. The flow of H2 fuel can further be mixed with other fuels or fluids such as, but not limited to, natural gas, coke oven gas, diesel, Jet-A, or the like. H2 fuels, when compared to traditional fuels (e.g., carbon fuels, petroleum fuels, etc.), have a higher burn temperature and velocity. H2 fuel, prior to being ignited, has a higher tendency to spread out especially when in its gaseous form. In some instances, a portion of the H2 fuel can remain within a fuel nozzle such that when ignition of the H2 fuel within the combustion chamber occurs, the flame propagates and flashes back into the fuel nozzle. Further, the H2 fuel, once fed to the combustion chamber, spreads out faster than traditional fuels. As such, it is important to ensure that the H2 fuel has a desired momentum when being fed to the combustion chamber to ensure that the H2 fuel does not ignite or spread to undesired regions. Feeding the flow of fuel at varying temperatures to the combustion chamber addresses this issue especially prevalent with H2 fuels.

As used herein, the term "gaseous fuel" or iterations thereof refers to a combustible fuel in a gaseous state. It will be appreciated that gaseous fuel is different from atomized fuel. Atomized fuel utilizes an impeller, orifices, or the like to take a liquid fuel and atomize the liquid fuel into very small droplets.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first" and "second" may be used interchangeably to distinguish one component from another and are not intended to signify location or importance of the individual components.

As used herein, the term "upstream" refers to a direction that is opposite the fluid flow direction, and the term "downstream" refers to a direction that is in the same direction as the fluid flow. The term "forward" means in front of something and "aft" means behind something. For example, when used in terms of fluid flow, fore/forward can mean upstream and aft/rearward can mean downstream. In another example, with regard to a turbine engine, forward refers to a position closer to an engine inlet and aft refers to a position closer to an engine nozzle or exhaust or can be relative to a local flow direction through the turbine engine.

The term "fluid" may be a gas or a liquid, or multi-phase. The term "fluid communication" means that a fluid is capable of making the connection or passing among the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

In certain exemplary embodiments of the present disclosure, a turbine engine defining a centerline and a circumferential direction is provided. The turbine engine may generally include a turbomachine and a rotor assembly. The rotor assembly may be driven by the turbomachine. The turbomachine, the rotor assembly, or both may define an annular flow path relative to the centerline of the turbine engine.

All directional references (e.g., radial, axial, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, Digital Versatile Discs (DVDs), Compact Disc - Read Only Memory (CD-ROMs), etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

Reference will now be made in detail to the architecture, and in particular the fuel injector, located within a combustion section of a turbine engine, one or more examples of which are illustrated in the accompanying drawings. The detailed description uses numerical and letter designations to refer to features in the drawings.

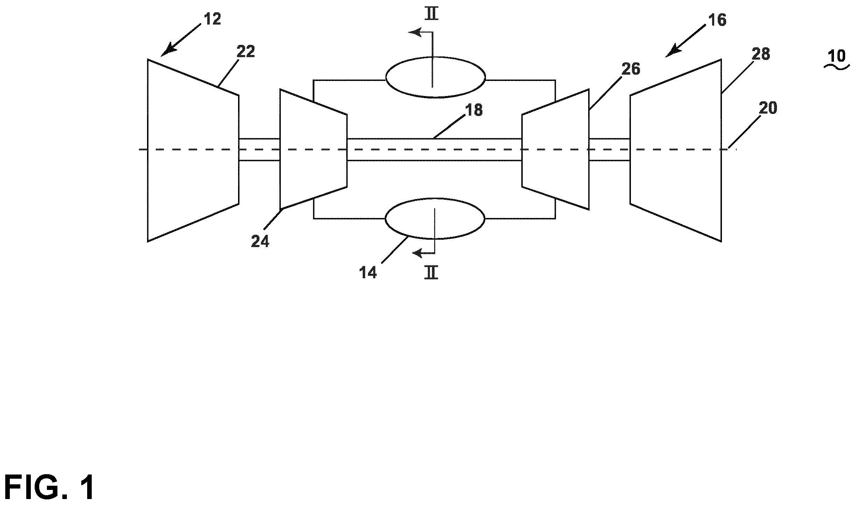

FIG. 1 is a schematic view of a turbine engine 10. As a non-limiting example, the turbine engine 10 can be used within an aircraft. The turbine engine 10 includes, at least, a compression section 12, a combustion section 14, and a turbine section 16 in serial flow arrangement. A drive shaft 18 rotationally couples the compression section 12 and the turbine section 16, such that rotation of one affects the rotation of the other and defines a rotational axis or engine centerline 20 for the turbine engine 10.

The compression section 12 can include a low-pressure (LP) compressor 22, and a high-pressure (HP) compressor 24 serially fluidly coupled to one another. The turbine section 16 can include an LP turbine 28, and an HP turbine 26 serially fluidly coupled to one another. The drive shaft 18 operatively couples the LP compressor 22, the HP compressor 24, the LP turbine 28 and the HP turbine 26 together. Alternatively, the drive shaft 18 can include an LP drive shaft and an HP drive shaft. The LP drive shaft couples the LP compressor 22 to the LP turbine 28, and the HP drive shaft couples the HP compressor 24 to the HP turbine 26. An LP spool is defined as the combination of the LP compressor 22, the LP turbine 28, and the LP drive shaft such that the rotation of the LP turbine 28 applies a driving force to the LP drive shaft, which in turn rotates the LP compressor 22. An HP spool is defined as the combination of the HP compressor 24, the HP turbine 26, and the HP drive shaft such that the rotation of the HP turbine 26 applies a driving force to the HP drive shaft which in turn rotates the HP compressor 24.

The compression section 12 includes a plurality of axially spaced stages. Each stage includes a set of circumferentially-spaced rotating blades and a set of circumferentially-spaced stationary vanes. The compressor blades for a stage of the compression section 12 can be mounted to a disk, which is mounted to the drive shaft 18. Each set of blades for a given stage can have its own disk. The vanes of the compression section 12 can be mounted to a casing which can extend circumferentially about the turbine engine 10. It will be appreciated that the representation of the compression section 12 is merely schematic and that there can be any number of stages. Further, it is contemplated, that there can be any other number of components within the compression section 12.

Similar to the compression section 12, the turbine section 16 includes a plurality of axially spaced stages, with each stage having a set of circumferentially-spaced, rotating blades and a set of circumferentially-spaced, stationary vanes. The turbine blades for a stage of the turbine section 16 can be mounted to a disk which is mounted to the drive shaft 18. Each set of blades for a given stage can have its own disk. The vanes of the turbine section 16 can be mounted to the casing in a circumferential manner. It is noted that there can be any number of blades, vanes and turbine stages as the illustrated turbine section is merely a schematic representation. Further, it is contemplated that there can be any other number of components within the turbine section 16.

The combustion section 14 is provided serially between the compression section 12 and the turbine section 16. The combustion section 14 is fluidly coupled to at least a portion of the compression section 12 and the turbine section 16 such that the combustion section 14 at least partially fluidly couples the compression section 12 to the turbine section 16. As a non-limiting example, the combustion section 14 can be fluidly coupled to the HP compressor 24 at an upstream end of the combustion section 14 and to the HP turbine 26 at a downstream end of the combustion section 14.

During operation of the turbine engine 10, ambient or atmospheric air is drawn into the compression section 12 via a fan (not illustrated) upstream of the compression section 12, where the air is compressed defining a compressed air. The compressed air then flows into the combustion section 14 where the compressed air is mixed with fuel and ignited, thereby generating combustion gases. Some work is extracted from these combustion gases by the HP turbine 26, which drives the HP compressor 24. The combustion gases are discharged into the LP turbine 28, which extracts additional work to drive the LP compressor 22, and the exhaust gas is ultimately discharged from the turbine engine 10 via an exhaust section (not illustrated) downstream of the turbine section 16. The driving of the LP turbine 28 drives the LP spool to rotate the fan (not illustrated) and the LP compressor 22. The compressed air flow and the combustion gases can together define a working air flow that flows through the fan, compression section 12, combustion section 14, and turbine section 16 of the turbine engine 10.

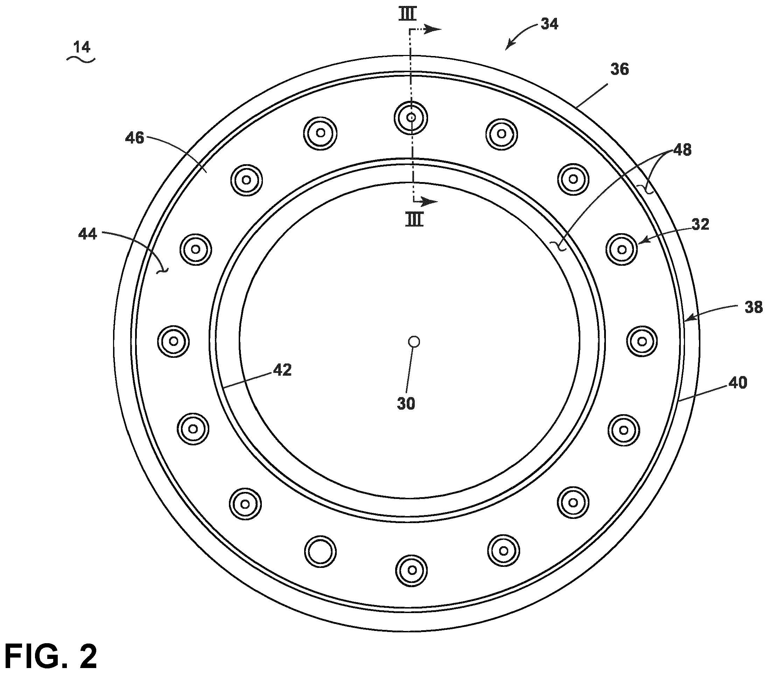

FIG. 2 depicts a cross-sectional view of the combustion section 14 of FIG. 1, taken along line II-II of FIG. 1. For purposes of illustration, the drive shaft 18 (FIG. 1) has been removed. The combustion section 14 includes a combustor 34. The combustor 34 includes a dome wall 44 including a set of fuel nozzles 32. The set of fuel nozzles 32 are annularly arranged about a combustor centerline 30. The combustor centerline 30 can be the engine centerline 20 (FIG. 1) of the turbine engine 10 (FIG. 1). Additionally, or alternatively, the combustor centerline 30 can be a centerline for the combustion section 14, a single combustor, or a set of combustors that are arranged about the combustor centerline 30.

The set of fuel nozzles 32 can include rich cups, lean cups, or a combination of both rich and lean cups annularly provided about the engine centerline. It should be appreciated that the annular arrangement of fuel nozzles can be one or multiple fuel nozzles and one or more of the fuel nozzles can have different characteristics. The combustor 34 is defined, at least in part, by a combustor liner 38. The combustor 34 can have a can, can-annular, or annular arrangement depending on the type of engine in which the combustor 34 is located. In a non-limiting example, the combustor 34 can have a combination arrangement as further described herein located within a casing 36 of the engine. The combustor liner 38, as illustrated by way of example, can be annular. The combustor liner 38 can include an outer combustor liner 40 and an inner combustor liner 42 concentric with respect to each other and annular about the engine centerline. The dome wall 44 together with the combustor liner 38 can define a combustion chamber 46 having an annular configuration disposed about the combustor centerline 30. The set of fuel nozzles 32 can be fluidly coupled to the combustion chamber 46. A compressed air passageway 48 can be defined at least in part by both the combustor liner 38 and the casing 36.

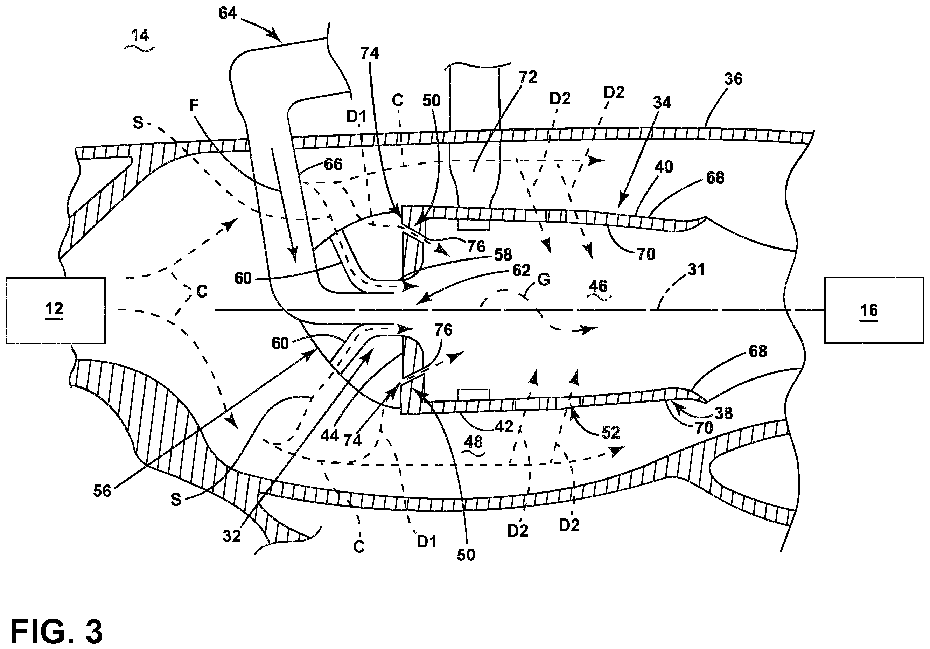

FIG. 3 depicts a cross-section view taken along line III-III of FIG. 2 illustrating the combustion section 14. At least one flame shaping passage can fluidly connect compressed air and the combustion chamber 46. By way of example, the at least one flame shaping passage is illustrated as first set of flame shaping holes 50 or a second set of flame shaping holes 52. The combustor 34 can include the first set of flame shaping holes 50, the second set of flame shaping holes 52, or both the first set of flame shaping holes 50 and the second set of flame shaping holes 52.

The first set of flame shaping holes 50 pass through the dome wall 44, fluidly coupling compressed air (C) from the compression section 12 or the compressed air passageway 48 to the combustion chamber 46. The second set of flame shaping holes 52 pass through the combustor liner 38, fluidly coupling compressed air from the compressed air passageway 48 to the combustion chamber 46.

Each fuel nozzle of the set of fuel nozzles 32 can be coupled to and disposed within a dome assembly 56. Each fuel nozzle of the set of fuel nozzles 32 can include a flare cone 58 and a swirler 60. The flare cone 58 includes an outlet 62 directly fluidly coupled to the combustion chamber 46. Each fuel nozzle of the set of fuel nozzles 32 is fluidly coupled to a fuel inlet 64 via a passageway 66.

Both the inner combustor liner 42 and the outer combustor liner 40 have an outer surface 68 and an inner surface 70 at least partially defining the combustion chamber 46. The combustor liner 38 can be made of one continuous monolithic portion or be multiple monolithic portions assembled together to define the inner combustor liner 42 and the outer combustor liner 40. By way of non-limiting example, the outer surface 68 can define a first piece of the combustor liner 38 while the inner surface 70 can define a second piece of the combustor liner 38 that when assembled together form the combustor liner 38. As described herein, the combustor liner 38 includes the second set of flame shaping holes 52. It is further contemplated that the combustor liner 38 can be any type of combustor liner 38, including but not limited to a single walled or a double walled liner or a tile liner. An ignitor 72 can be provided at the combustor liner 38 and fluidly coupled to the combustion chamber 46, at any location, by way of non-limiting example upstream of the second set of flame shaping holes 52.

During operation, compressed air (C) from a compressed air supply, such as the LP compressor 22 or the HP compressor 24 of FIG. 1, can flow from the compression section 12 to the combustor 34. A portion of the compressed air (C) can flow through the dome assembly 56. A first part of the compressed air (C) flowing through the dome assembly 56 can be fed to each fuel nozzle of the set of fuel nozzles 32 via the swirler 60 as a swirled airflow (S). A supply of fuel (F) is fed to each fuel nozzle of the set of fuel nozzles 32 via the fuel inlet 64 and the passageway 66. The swirled airflow (S) and the supply of fuel (F) are mixed at the flare cone 58 and fed to the combustion chamber 46 as a fuel/air mixture. The ignitor 72 can ignite the fuel/air mixture to define a flame within the combustion chamber 46, which generates a combustion gas (G). While shown as starting axially downstream of the outlet 62, it will be appreciated that the fuel/air mixture can be ignited at or near the outlet 62.

A second part of the compressed air (C) flowing through one or more portions of the dome assembly 56 can be fed to the first set of flame shaping holes 50 as a first flame shaping airflow (D1). That is, a portion of the compressed air (C) from the compression section 12 can flow through the dome wall 44 and into the combustion chamber 46 by passing through the first set of flame shaping holes 50. An inlet 74 is defined by a portion of one or more flame shaping holes of the first set of flame shaping holes 50. The inlet 74 is fluidly coupled to the compressed air (C). The first flame shaping airflow (D1) enters the one or more flame shaping holes of the first set of flame shaping holes 50 at the inlet 74 and exits the one or more flame shaping holes of the first set of flame shaping holes 50 at an outlet 76 located at an aft surface of the dome wall 44.

Another portion of the compressed air (C) can flow through the compressed air passageway 48 and can be fed to the second set of flame shaping holes 52 as a second flame shaping airflow (D2). In other words, another portion of the compressed air (C) can flow axially past the dome assembly 56 and enter the combustion chamber 46 by passing through the second set of flame shaping holes 52. That is, compressed air (C) can flow through the combustor liner 38 and into the combustion chamber 46 by passing through the second set of flame shaping holes 52.

The first flame shaping airflow (D1) can be used to direct and shape the flame. The second flame shaping airflow (D2) can be used to direct the combustion gas (G). In other words, the first set of flame shaping holes 50 or the second set of flame shaping holes 52 extending through the dome wall 44 or the combustor liner 38 direct compressed air (C) into the combustion chamber 46, where the directed compressed air (C) is used to control, shape, cool, or otherwise contribute to the combustion process in the combustion chamber 46.

The combustor 34 shown in FIG. 3 is well suited for the use of a hydrogencontaining gas as the fuel because it helps contain the faster moving flame front associated with hydrogen fuel, as compared to traditional hydrocarbon fuels. However, the combustor 34 can be used with other fuels, such as gaseous and liquid hydrocarbon fuels.

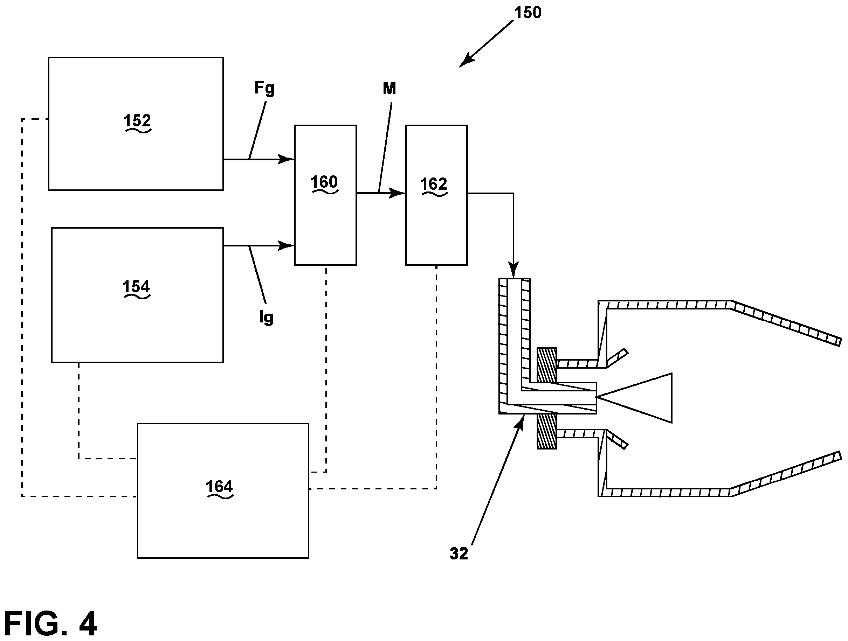

FIG. 4 illustrates a schematic view of a fuel supply system 150 for supplying a supply of fuel to each fuel nozzle of the set of fuel nozzles 32 of FIGS. 2-3. The fuel supply system 150 includes a gaseous fuel supply 152 and an inert gas supply 154. The gaseous fuel supply 152 supplies a supply of gaseous fuel (Fg) can be a gaseous hydrogen fuel, such as a non-diluent hydrogen fuel, or other gaseous fuel. The inert gas supply 154 can supply a supply of inert gas (Ig), by way of non-limiting example, such as carbon dioxide (CO₂), nitrogen (N₂), helium (He), Argon (Ar), or combinations thereof.

A mixing manifold 160 receives the supply of gaseous fuel (Fg) from the gaseous fuel supply 152 and the supply of inert gas (Ig) from the inert gas supply 154. The mixing manifold 160 mixes the supply of gaseous fuel (Fg) with the supply of inert gas (Ig) to form a mixture of fuel and inert gas (M). The mixture of fuel and inert gas (M)is provided from the mixing manifold 160 to a fuel manifold 162 where the mixture of fuel and inert gas (M) can be supplied to each fuel nozzle of the set of fuel nozzles 32. The fuel manifold 162 can provide the mixture of fuel and inert gas (M) to individual areas, parts, conduits, or other features of each fuel nozzle of the set of fuel nozzles 32 requiring a supply of fuel, while receiving the mixture from a common source such as the mixing manifold 160. In an alternative, non-limiting example, it is contemplated that the mixing manifold 160 and the fuel manifold 162 are combined as a single unitary feature, both mixing the supply of gaseous fuel (Fg) with the supply of inert gas (Ig) and supplying the mixture of fuel and inert gas (M) to each fuel nozzle of the set of fuel nozzles 32. As illustrated, the mixing manifold 160 mixes the supply of gaseous fuel (Fg) with the supply of inert gas (Ig), and the fuel manifold 162 can supply the mixture of fuel and inert gas (M) to the various areas of each fuel nozzle of the set of fuel nozzles 32 receiving the supply of fuel (F) of FIG. 3. In additional non-limiting examples, a portion of the supply of gaseous fuel (Fg) can be supplied directly to the fuel manifold 162, bypassing the mixing manifold 160, while another portion of the supply of gaseous fuel (Fg) is intermixed with the supply of inert gas (Ig).

Gaseous fuels, such as hydrogen and non-diluent hydrogen, have faster flame speeds and higher flame temperatures than that of liquid fuels or atomized liquid fuels, which can result in flashback or flame holding along portions of the fuel injector or the surrounding environment. Such flashback or flame holding can impact durability at the fuel injector.

Mixing gaseous fuels with an inert gas can reduce the flame speed. That is, a mixture of gaseous fuel with an inert gas has a slower flame speed than that of the gaseous fuel alone. For example, a mixture of 50% hydrogen and 50% argon has a flame speed of about six meters per second (6 m/s), while the flame speed for 100% hydrogen is about fourteen meters per second (14 m/s). Therefore, as can be appreciated, utilizing an inert gas mixed with a gaseous fuel supply can reduce flame speeds for fuel combusted within the combustor 34 (FIG. 1), which can reduce flame holding or flashback, thereby increasing durability and lifetime of each fuel nozzle of the set of fuel nozzles 32, combustor 34, and other surrounding components. Furthermore, utilizing the inert gas can appreciate the emissions benefits of utilizing a gaseous fuel like hydrogen, without requiring a fuel injector specifically adapted for use with hydrogen fuels.

In additional non-limiting examples, the mixture of gaseous fuel and inert gas can include 5%, 10%, 15%, 20%, 25%, or 50% of the inert gas. When the mixture of gaseous fuel and inert gas is further intermixed with air, a ratio of the mixture of gaseous fuel and inert gas to air can be greater than or equal to 1: 1 or less than or equal to 8: 1, while lesser and greater ratios are contemplated.

A controller 164 can couple to one or more of the gaseous fuel supply 152, the inert gas supply 154, or the mixing manifold 160. The controller 164 can be integrated with an avionics system onboard an aircraft, for example, for actively controlling the supplies or ratios of the supply of inert gas (Ig) intermixed with the supply of gaseous fuel (Fg) in preparation for, during, or after a flight. Actively controlling the supply of gaseous fuel (Fg) and the supply of inert gas (Ig) can be used to vary the amount of inert gas intermixed with the fuel. In a non-limiting example, the supply of inert gas (Ig) can be mixed with the supply of gaseous fuel (Fg) only during takeoff, which typically has the most demanding engine conditions with respect to durability and dynamics. During other portions of flight, the supply of inert gas can be limited, metered, or ceased, in non-limiting examples.

Benefits associated with the aspects herein include reducing flame speed and flame temperature for a gaseous fuel or highly combustible fuel, like hydrogen or non-diluent hydrogen. The incorporation of the inert gas reduces the flame speed and flame temperature, providing increased durability at the fuel injector and combustor, which improves time on wing, component lifetime, and reduces required maintenance and related cost. Furthermore, the incorporation of the inert gas permits appreciating the benefits of reduced emissions from the use of reduced emissions gaseous fuels, such as hydrogen and non-diluent hydrogen fuels, while mitigating or eliminating flashback and flame holding along the fuel injector.

Additionally, intermixing a fuel with an inert gas can provide a mixture that has reduced sound velocities as compared to that of fuel alone. A reduction in sound velocities increases or improves flame stability, as the incorporation of the inert gas reduces oscillation frequencies. Therefore, the incorporation of the inert gas can mitigate oscillatory vibrations of the mixture to be combusted, which can increase or improve flame stability.

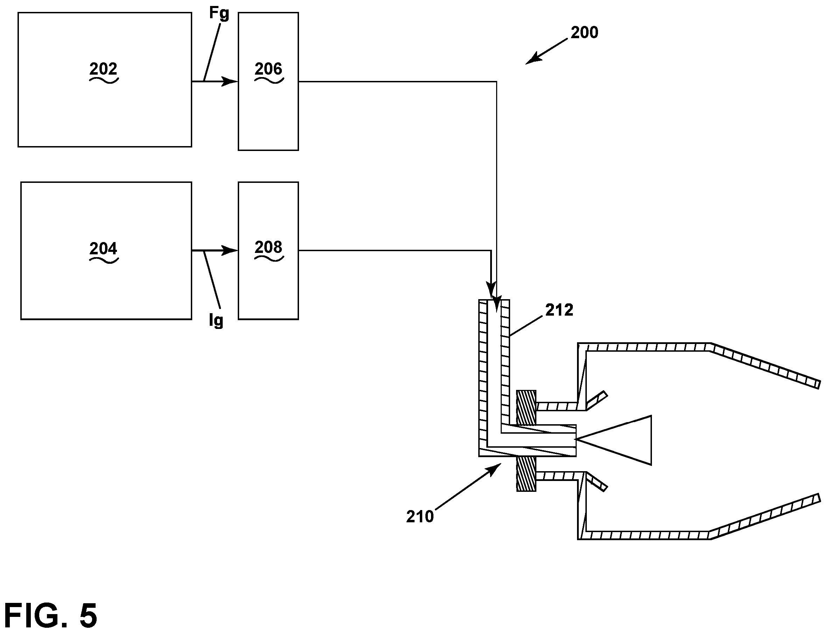

Referring to FIG. 5, a fuel supply system 200 can include a gaseous fuel supply 202 and an inert gas supply 204. A gaseous fuel manifold 206 receives a supply of gaseous fuel (Fg) from the gaseous fuel supply 202 and an inert gas manifold 208 receives a supply of inert gas (Ig) from the inert gas supply 204. Each of the gaseous fuel manifold 206 and the inert gas manifold 208 can separately supply gaseous fuel and inert gas to a fuel nozzle 210 through a supply line 212. The supply of gaseous fuel (Fg) and the supply of inert gas (Ig) can be intermixed within the fuel nozzle 210 or the supply line 212 creating a mixture of fuel and inert gas having a reduced flame speed, reduced flame temperature, or both, as compared to that of the gaseous fuel alone.

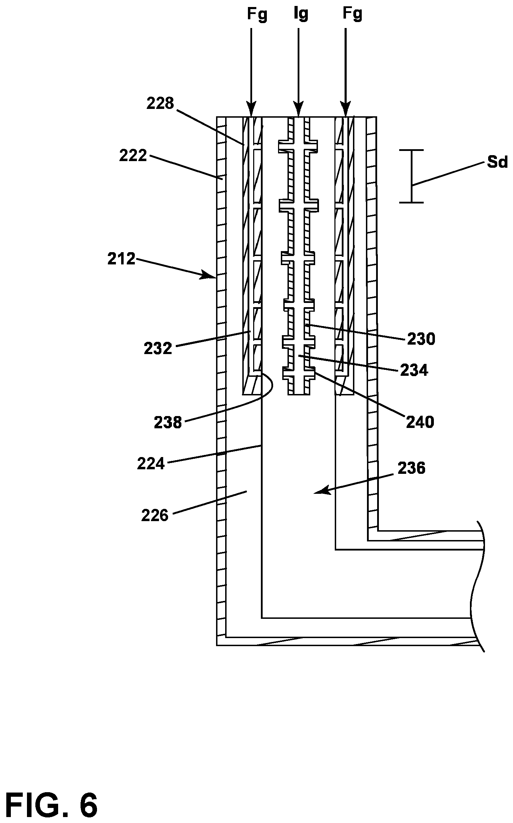

Referring to FIG. 6, a schematic sectional view of the supply line 212 of FIG. 5 is shown for receiving a supply of gaseous fuel (Fg) from the gaseous fuel manifold 206 (FIG. 5) and a supply of inert gas (Ig) from the inert gas manifold 208 (FIG. 5). The supply line 212 includes an outer wall 222 surrounding and spaced from an interior conduit 224 by a gap 226. A gaseous fuel supply conduit 228 is provided within the gap 226 in annular arrangement about the interior conduit 224 and an inert gas supply conduit 230 extends interior of the interior conduit 224. A mixing passage 236 is defined within the interior conduit 224 for mixing the supply of gaseous fuel (Fg) with the supply of inert gas (Ig).

A set of gaseous fuel supply passages 232 exhaust to the mixing passage 236 to provide the supply of gaseous fuel (Fg) to the interior conduit 224. A set of inert gas supply passages 234 exhaust to the mixing passage 236 through the interior conduit 224 to provide the supply of inert gas (Ig) to the interior conduit 224. The set of gaseous fuel supply passages 232 and the set of inert gas supply passages 234 can be aligned and arranged such that the supply of gaseous fuel intersects with or impinges upon the supply of inert gas within the mixing passage 236. Such an intersection or impingement among the supply of gaseous fuel (Fg) and the supply of inert gas (Ig) can facilitate intermixing of the two. It should be appreciated that any suitable means or method of intermixing the supply of gaseous fuel (Fg) and the supply of inert gas (Ig) within the supply line 212 is contemplated, such that the supply of gaseous fuel (Fg) is suitably mixed with the supply of inert gas (Ig) to define a reduced flame speed for the mixture, as compared to the flame speed for the gaseous fuel alone. In a non-limiting example, such a mixture can be a homogenous mixture or a nearly homogenous mixture when exhausting from the mixing passage 236.

The set of gaseous fuel supply passages 232 can exhaust to the mixing passage 236 at a set of gaseous fuel outlets 238 and the set of inert gas supply passages 234 can exhaust to the mixing passage 236 at a set of inert gas outlets 240. In a non-limiting example, a spacing distance (Sd) between adjacent gaseous fuel outlets of the set of gaseous fuel outlets 238 and between adjacent inert gas outlets of the set of inert gas outlets 240 can decrease in the flow direction. That is, the set of gaseous fuel outlets 238 and the set of inert gas outlets 240 get closer to one another along the flow direction, which can improve mixing of the supply of gaseous fuel (Fg) with the supply of inert gas (Ig). That is, the set of gaseous fuel outlets 238 and the set of inert gas outlets 240 define a decreasing spacing in the flow direction.

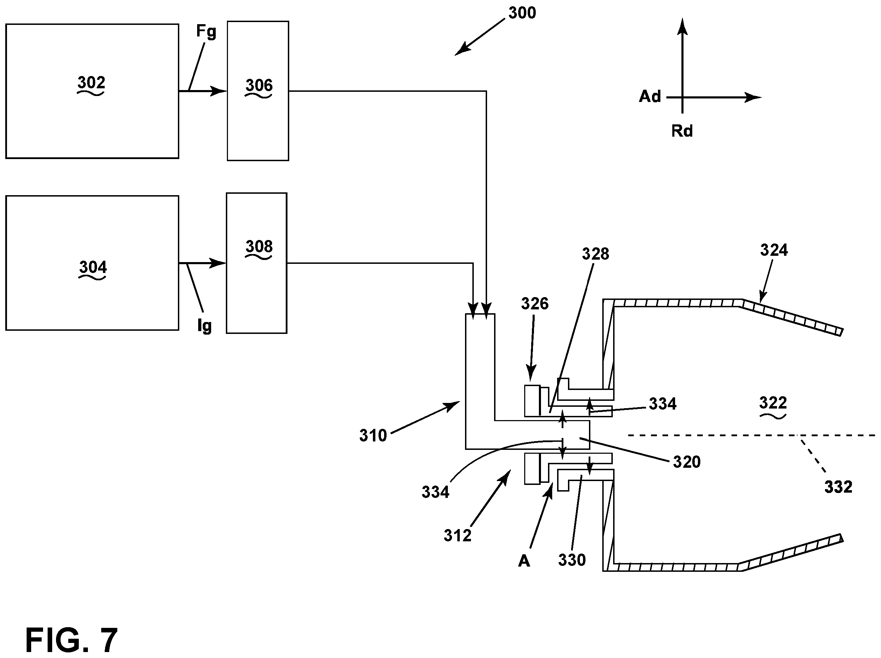

Referring to FIG. 7, a fuel supply system 300 is provided including a gaseous fuel supply 302 and an inert gas supply 304. The gaseous fuel supply 302 provides a supply of gaseous fuel (Fg), like hydrogen or non-diluent hydrogen fuels, to a gaseous fuel manifold 306. The inert gas supply 304 provides a supply of inert gas (Ig), like carbon dioxide, nitrogen, argon, or helium to an inert gas manifold 308. The gaseous fuel and the inert gas are provided from the gaseous fuel manifold 306 and the inert gas manifold 308 to a fuel supply line 310 feeding a fuel injector 312.

The fuel injector 312 can include a fuel nozzle 320 exhausting to a combustion chamber 322 for a combustor 324, like the combustor 34 of FIG. 2. A swirler assembly 326 is provided in annular arrangement about the fuel nozzle 320 having an axial swirler 328 and a radial swirler 330. In alternative non-limiting examples, the swirlers can both be axial swirlers or radial swirlers, or only one swirler being either an axial swirler or a radial swirler. The axial swirler 328 can impart a swirl or tangential component to a flow of air moving in an axial direction (Ad), and the radial swirler 330 can impart a swirl or tangential component to a flow of air moving in a radial direction (Rd). The axial direction can be defined parallel to an axis defined though the fuel nozzle 320, a combustor axis 332, or the engine centerline 20 (FIG. 1). The radial direction (Rd) can be defined perpendicular to and extending from the axial direction (Ad).

One or more openings 334 can be provided in the fuel injector 312, fluidly coupling one or more of the fuel nozzle 320, the axial swirler 328, or the radial swirler 330 to the supply of fuel, the supply of inert gas, or a mixture thereof. In this way, it should be appreciated that the supply of gaseous fuel (Fg) and the supply of inert gas (Ig) can be mixed within the fuel injector 312. In non-limiting examples, the supply of gaseous fuel (Fg) and the supply of inert gas (Ig) can be mixed within the fuel nozzle 320, the axial swirler 328, the radial swirler 330, or combinations thereof. For example, the supply of gaseous fuel (Fg) and the supply of inert gas (Ig) can be mixed within the fuel nozzle 320, where the mixture thereof is exhausted from the fuel nozzle 320 for combustion, or exhausted from the fuel nozzle 320 to the axial swirler 328, the radial swirler 330, or both for mixing the mixture of fuel and inert gas with a supply of air (A) provided from the axial or radial swirlers 328, 330. In a non-limiting example, the supply of gaseous fuel (Fg), the supply of inert gas (Ig), or both, can be exhausted from the fuel nozzle 320 through the one or more openings 334 to the radial or axial swirlers 328, 330. In another non-limiting example, the supply of gaseous fuel (Fg) or the supply of inert gas (Ig) can be provided to one or both of the axial and radial swirlers 328, 330 for mixing with the supply of air (A). The supply of gaseous fuel (Fg) can be mixed with the supply of air (A) to form a mixture of fuel and air, which can be further intermixed with the supply of inert gas (Ig), which can intermixed be within the fuel injector 312. In another non-limiting example, the supply of inert gas (Ig) can be mixed with the supply of air (A) to form a mixture of air and inert gas, which can be further intermixed with the supply of gaseous fuel (Fg), which can be intermixed within the fuel injector 312. It should be understood that any arrangement of the one or more openings 334 among the fuel injector 312, the fuel nozzle 320, the axial swirler 328, and the radial swirler 330 is contemplated such that a mixture of fuel and inert gas is at least partially intermixed within the fuel injector 312 and exhausted to the combustion chamber 322 for combustion. Such arrangements may be further intermixed with the supply of air (A) from one or both of the axial and radial swirlers 328, 330, while any system or means for intermixing the supply of air (A) with one or both of the supply of gaseous fuel (Fg) and the supply of inert gas (Ig) is contemplated.

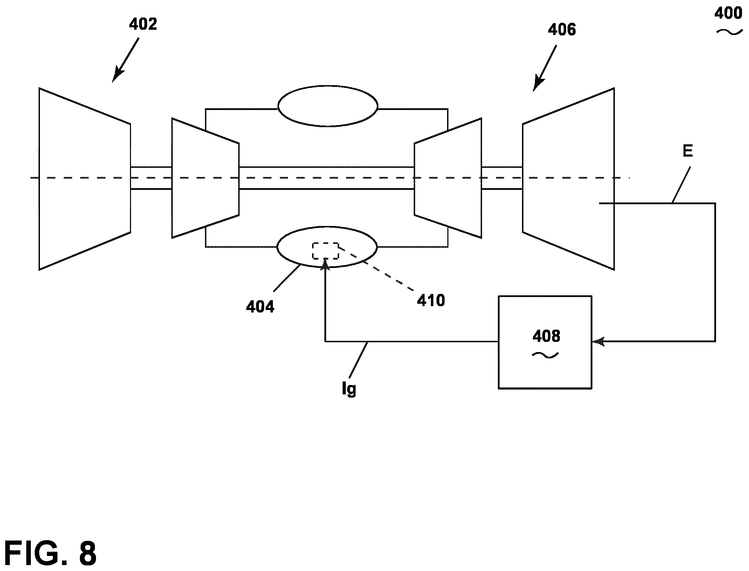

Referring to FIG. 8, a schematic view of a turbine engine 400 is shown having a compressor section 402, a combustor 404, and a turbine section 406 in serial arrangement. Operation of the turbine engine 400 generates engine exhaust gases (E) as a mixture of gases containing an inert gas (Ig). The engine exhaust gases (E) can be routed or otherwise supplied to an inert gas retrieval device 408. The inert gas retrieval device 408 can separate the inert gas (Ig) from the engine exhaust gases (E). For example, carbon dioxide (CO₂) or nitrogen (N₂) can be separated from the remaining engine exhaust gases (E). In non-limiting examples, air separation can be achieved with the inert gas retrieval device 408 by distillation, pressure swing adsorption, or membrane separation. It is further contemplated that the inert gas retrieval device 408 can include or fluidly couple to a reservoir for storing the inert gas (Ig) until it is ready for use with the turbine engine 400.

The inert gas (Ig) separated from the engine exhaust gases (E) can be provided to the combustor 404 for intermixing with fuel for combustion. The inert gas (Ig) can be provided to a fuel nozzle 410 such as the fuel nozzle 32 of FIGS. 2 and 3, provided to an inert gas supply such as the inert gas supplies 154, 204, 304, of FIGS. 4-5 and 7, can be supplied to a manifold, such as the mixing manifold 160 of FIG. 4, the inert gas manifold 208, 308 of FIGS. 5 and 6, or can be supplied to the inert gas supply conduit 230 of FIG. 6 in non-limiting examples.

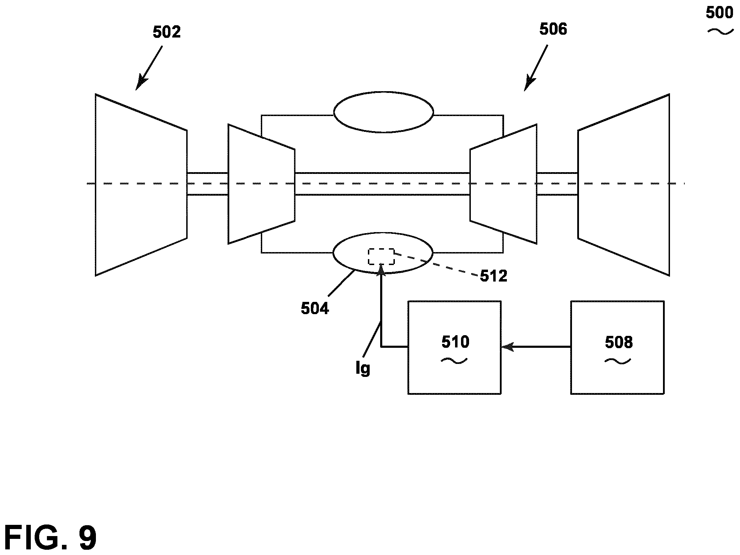

Referring to FIG. 9, a schematic view of a turbine engine 500 is shown having a compressor section 502, a combustor 504, and a turbine section 506 in serial arrangement. A volume of atmospheric air 508 contains a mixture of gases including inert gases (Ig), such as hydrogen and carbon dioxide. The atmospheric air 508 can be collected by or otherwise provided to an inert gas retrieval device 510 that can separate the inert gas (Ig) from the atmospheric air 508. In non-limiting examples, air separation can be achieved with the inert gas retrieval device 510 by distillation, pressure swing adsorption, or membrane separation.

The inert gas (Ig) separated from the atmospheric air 508 can be provided to the combustor 504 for intermixing with fuel for combustion. The inert gas (Ig) can be provided to a fuel nozzle 512, such as the fuel nozzle 32 of FIGS. 2 and 3, provided to an inert gas supply, such as the inert gas supplies 154, 204, 304, of FIGS. 4-5 and 7, or can be supplied to a manifold, such as the mixing manifold 160 of FIG. 4, the inert gas manifold 208, 308 of FIGS. 5 and 6, the inert gas supply conduit 230 of FIG. 6 in non-limiting examples.

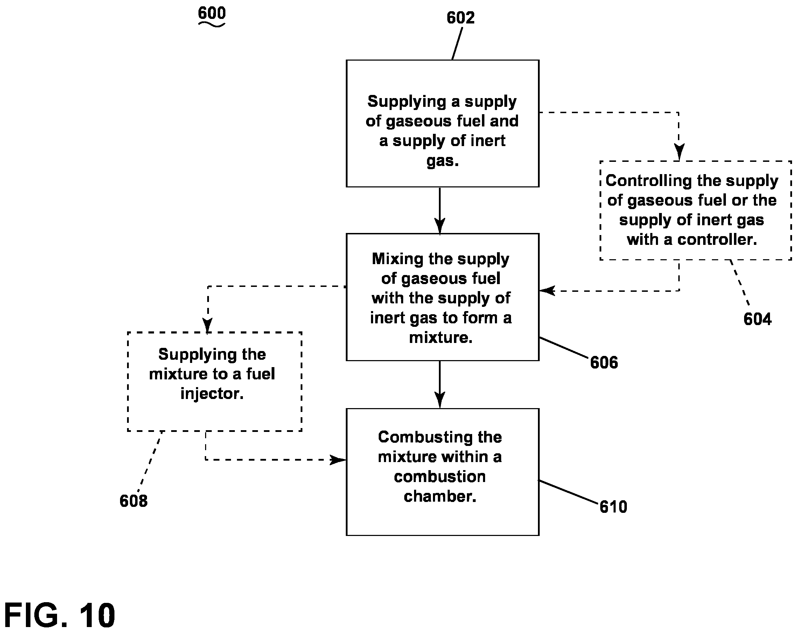

Referring to FIG. 10, a method 600 of supplying a fuel to a combustor is provided as a flow chart. At 602, the method 600 can include supplying a supply of gaseous fuel and a supply of inert gas. The supply of gaseous fuel can be provided from a fuel supply like the gaseous fuel supply 152 of FIG. 4, the gaseous fuel supply 202 of FIG. 5, or the gaseous fuel supply 302 of FIG. 6 in non-limiting examples. The supply of inert gas can be provided from a supply of inert gas like the inert gas supply 154 of FIG. 4, the inert gas supply 204 of FIG. 5, the inert gas supply 304 of FIG. 6, or the inert gas retrieval devices 408, 510 of FIGS. 8-9 in non-limiting examples.

At 604, the method 600 can optionally include controlling the supply of gaseous fuel or the supply of inert gas with a controller. The controller can be the controller 164 of FIG. 4, for example, which can operably couple to one or more areas of the fuel supply system, such as one or more of the fuel supply system 150, 200, 300 (FIGS. 4-5, 7), the gaseous fuel supply 152, 202, 302 (FIGS. 4-5, 7), the inert gas supply 154, 204, 304 (FIGS. 4-5, 7), the mixing manifold 160 (FIG. 4), the fuel manifold 162 (FIG. 4), a gaseous fuel manifold 206, 306 (FIGS. 5, 7), an inert gas manifold 208, 308 (FIGS. 4-5, 7), the inert gas retrieval devices 408, 510 (FIGS. 8-9), the fuel injector 312 of FIG. 7, or the fuel nozzle 32, 210, 410, 512 (FIGS. 4-5, 8-9) for controlling a flow of a supply of gaseous fuel (Fg), a supply of inert gas (Ig), a supply of air (A), or combinations thereof. Such operable coupling permits the controller 164 (FIG. 4) to control supply of the fuel, inert gas, or air, such as flow rates for each fluid. Such controlling can include actively controlling the supply of fuel, inert gas, or air. Active control can be during a flight, for example, where engine requirements for various flight conditions, such as takeoff, cruise, ascend, descend, or landing can require different flow rates or ratios of a supply of fuel, inert gas, and air to efficiently operate the turbine engine 10 (FIG. 1) or aircraft carrying the turbine engine 10.

At 606, the method 600 can include mixing the supply of gaseous fuel with the supply of inert gas to form a mixture. Such mixing can occur within a mixing manifold, such as the mixing manifold 160 of FIG. 4, the supply line 212 of FIGS. 5 and 6, or the fuel injector 312 of FIG. 7. Control of the supply of gaseous fuel (Fg) and the supply of inert gas (Ig) can be achieved from one or more of the gaseous fuel supply 152, 202, 302 (FIGS. 4-5, 7), an inert gas supply 154, 204, 304 (FIGS. 4-5, 7), a mixing manifold 160 (FIG. 4), a fuel manifold 162 (FIG. 4), a gaseous fuel manifold 206, 306 (FIGS. 5, 7), an inert gas manifold 208, 308 (FIGS. 5, 7), or the controller 164 (FIG. 4) in order to control the ratio of fuel to air for the mixture. In a non-limiting example, mixing the supply of gaseous fuel (Fg) with the supply of inert gas (Ig) can be a homogenous mixture. In another non-limiting example, mixing the supply of gaseous fuel (Fg) with the supply of inert gas (Ig) can include impinging the supply of gaseous fuel (Fg) onto the supply of inert gas (Ig), such as within the supply line 212 of FIG. 6.

At 608, the method 600 can optionally include supplying the mixture to a fuel manifold, a fuel supply line, or a fuel injector. For example, the mixture can be provided to the fuel manifold 162 of FIG. 4 from the mixing manifold 160. The mixture can be provided from the fuel manifold 162 to the fuel nozzle 32 for injection to the combustor for combustion of the mixture. In another example, the mixture can be provided to a fuel supply line, like the supply line 212 of FIGS. 5 and 6, where the mixture can be provided to the fuel nozzle 210 for injection to the combustor for combustion of the mixture. In yet another example, the mixture can be provided to a fuel injector, such as the fuel nozzle 32 of FIG. 4 or the fuel nozzle 210 of FIGS. 5 and 6.

At 610, the method 600 can include combusting the mixture within a combustion chamber. For example, the mixture can be combusted within the combustion chamber 46 of FIG. 2 or the combustion chamber 322 of FIG. 7 in non-limiting examples.

The method 600 described herein provides for intermixing of a supply of gaseous fuel with a supply of inert gas to form a mixture and combusting the mixture. Intermixing the supply of gaseous fuel with the supply of inert gas reduces the flame speed and flame temperature of gaseous fuels, such as hydrogen or non-diluent hydrogen gases. Hydrogen and non-diluent hydrogen fuels permit the reduction or elimination of carbon emissions. Intermixing these fuels with inert gas reduces the flame speed and flame temperature to permit burning of such fuels within the turbine engine environment, while mitigating or eliminating the occurrence of flashback and flame holding, which improves durability and lifetime of the fuel injector and related combustor components. In this way, gaseous fuels like hydrogen and non-diluent hydrogen can be utilized within turbine engine architectures to appreciate the emissions benefits of utilizing a hydrogen or non-diluent hydrogen fuel, while providing the required durability for the engine within the fuel injector and combustor to utilize the gaseous fuels.

Benefits associated with the fuel supply system as described herein include appreciating the emissions benefits of using fuels, like hydrogen fuels or non-diluent hydrogen fuels, while reducing flame speed and flame temperature to increase or improve durability at the fuel injector and combustor.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

It will be appreciated that the fuel injectors, and aspects thereof, as discussed herein are provided by way of example only and that in other exemplary embodiments, the fuel injectors may have any other suitable configurations. The aspects and features provided herein need not be limited to the embodiments as shown, and it is further contemplated that features and aspects from one or more embodiments can be added, removed, or interchanged with one or more other embodiment to define additional embodiments herein.

It should be appreciated that the different fuel injectors and their features as described among FIGS. 4-10 can all be utilized within a common engine, such as the turbine engine 10 of FIG. 1, or within a common component, such as the combustor 34 of FIG. 2, and it should be understood that the fuel injectors and their features are not mutually exclusive.

Further aspects are provided by the subject matter of the following clauses:
A method of supplying a fuel to a combustor for a turbine engine, the method comprising: mixing an inert gas with a gaseous fuel within a mixing manifold to form a mixture of gaseous fuel and inert gas.

The method of any preceding clause, further comprising extracting the inert gas from atmospheric air.

The method of any preceding clause, further comprising extracting the inert gas from engine exhaust gases.

The method of any preceding clause, wherein the mixture is a homogenous mixture.

The method of any preceding clause, further comprising supplying the inert gas to the mixing manifold from an inert gas supply.

The method of any preceding clause, further comprising supplying the gaseous fuel to the mixing manifold from a gaseous fuel supply.

The method of any preceding clause, further comprising controlling, with a controller, the inert gas supplied from the inert gas supply and the gaseous fuel supplied from the gaseous fuel supply.

The method of any preceding clause, wherein controlling further comprising actively controlling the inert gas supplied from the inert gas supply and the gaseous fuel supplied from the gaseous fuel supply.

The method of any preceding clause, further comprising supplying the mixture to a fuel manifold.

The method of any preceding clause, further comprising supplying the mixture to a fuel injector from the fuel manifold.

The method of any preceding clause, further comprising supplying the mixture to the fuel injector through a fuel supply line coupled to the fuel manifold.

The method of any preceding clause, wherein the inert gas is carbon dioxide, nitrogen, argon, or helium.

The method of any preceding clause, wherein the gaseous fuel is non-diluent hydrogen.

A method of supplying a fuel to a combustor for a turbine engine, the method comprising: supplying a gaseous fuel from a fuel manifold; supplying an inert gas from an inert gas manifold; mixing the gaseous fuel with the inert gas to form a mixture; and supplying the mixture to a fuel injector.

The method of any preceding clause, further comprising extracting the inert gas from atmospheric air or from engine exhaust gases.

The method of any preceding clause, wherein the mixture is a homogenous mixture.

The method of any preceding clause, further comprising supplying the inert gas to the inert gas manifold from an inert gas supply.

The method of any preceding clause, further comprising supplying the gaseous fuel to the fuel manifold from a gaseous fuel supply.

The method of any preceding clause, further comprising controlling, with a controller, the inert gas supplied from the inert gas manifold and the gaseous fuel supplied from the fuel manifold.

The method of any preceding clause, wherein controlling further comprising actively controlling the inert gas supplied from the inert gas manifold and the gaseous fuel supplied from the fuel manifold.

The method of any preceding clause, wherein mixing the gaseous fuel with the inert gas further comprises impinging the gaseous fuel on the inert gas.

The method of any preceding clause, wherein mixing the gaseous fuel with the inert gas occurs within a supply line coupled to the fuel injector.

The method of any preceding clause, further comprising mixing the gaseous fuel with the inert gas within a mixing manifold.

The method of any preceding clause, wherein impinging occurs within a fuel supply line prior to supplying the mixture to the fuel injector.

A method of supplying a fuel to a combustor for a turbine engine, the method comprising: supplying a gaseous fuel to a fuel injector; supplying an inert gas to the fuel injector; and mixing the gaseous fuel with the inert gas within the fuel injector to form a mixture.

The method of any preceding clause, further comprising extracting the inert gas from atmospheric air or from engine exhaust gases.

The method of any preceding clause, wherein the mixture is a homogenous mixture.

The method of any preceding clause, further comprising controlling, with a controller, the supplying of the inert gas and the supplying of the gaseous fuel.

The method of any preceding clause, wherein controlling further comprising actively controlling the supplying of the inert gas and the supplying of the gaseous fuel.

The method of any preceding clause, further comprising supplying the mixture to a supply of air provided from a swirler positioned about the fuel injector.

A fuel supply system for a combustor for a turbine engine, the fuel supply system comprising: a gaseous fuel supply for supplying a gaseous fuel; an inert gas supply for supplying an inert gas; and a fuel injector for supplying a mixture of the gaseous fuel and the inert gas to the combustor for igniting the mixture.

The fuel supply system of any preceding clause, wherein the mixture is a homogenous mixture.

The fuel supply system of any preceding clause, further comprising a mixing manifold for mixing the gaseous fuel and the inert gas to form the mixture.

The fuel supply system of any preceding clause, further comprising a fuel manifold receiving the mixture from the mixing manifold and coupled to the fuel injector to supply the mixture to the fuel injector.

The fuel supply system of any preceding clause, further comprising a fuel manifold coupled to the gaseous fuel supply.

The fuel supply system of any preceding clause, further comprising an inert gas manifold coupled to the inert gas supply.

The fuel supply system of any preceding clause, further comprising a fuel supply line coupled to the gaseous fuel supply and the inert gas supply.

The fuel supply system of any preceding clause, wherein the gaseous fuel and the inert gas is mixed within the fuel supply line to form the mixture.

The fuel supply system of any preceding clause, wherein the fuel supply line further comprises a gaseous fuel supply conduit and an inert gas supply conduit.

The fuel supply system of any preceding clause, wherein the gaseous fuel supply conduit exhausts within the fuel supply line at a set of gaseous fuel outlets and wherein the inert gas supply conduit exhausts within the fuel supply line at a set of inert gas outlets.

The fuel supply system of any preceding clause, wherein the set of gaseous fuel outlets are aligned with the set of inert gas outlets.

The fuel supply system of any preceding clause, wherein the set of gaseous fuel outlets and the set of inert gas outlets have a decreasing spacing defined in a flow direction.

The fuel supply system of any preceding clause, wherein the gaseous fuel is mixed with the inert gas to form the mixture within the fuel injector.

The fuel supply system of any preceding clause, further comprising at least one of a radial swirler and an axial swirler positioned about the fuel injector.

The fuel supply system of any preceding clause, further comprising one or more openings for providing the mixture to the at least one of the radial swirler and the axial swirler.

The fuel supply system of any preceding clause, further comprising a controller operably coupled to the gaseous fuel supply and the inert gas supply.

The fuel supply system of any preceding clause, wherein the controller actively controls the gaseous fuel and the inert gas.

The fuel supply system of any preceding clause, wherein the inert gas is carbon dioxide, nitrogen, argon, or helium.

The fuel supply system of any preceding clause, wherein the gaseous fuel is non-diluent hydrogen.

A method of supplying a fuel to a combustor for a turbine engine , the method comprising: supplying a gaseous fuel; supplying an inert gas; mixing the gaseous fuel with the inert gas to form a mixture of gaseous fuel and inert gas; and supplying the mixture of gaseous fuel and inert gas from a fuel injector to the combustor.

The method of any preceding clause, wherein mixing the gaseous fuel with the inert gas occurs within a mixing manifold.

The method of any preceding clause, further comprising supplying the inert gas to the mixing manifold from an inert gas supply.

The method of any preceding clause, further comprising supplying the gaseous fuel to the mixing manifold from a gaseous fuel supply.

The method of any preceding clause, further comprising controlling, with a controller, supplying of the inert gas from the inert gas supply and supplying of the gaseous fuel from the gaseous fuel supply.

The method of any preceding clause, further comprising supplying the mixture to a fuel manifold.

The method of any preceding clause, wherein supplying the inert gas further comprises supplying the inert gas to an inert gas manifold.

The method of any preceding clause, wherein supplying the gaseous fuel further comprises supplying the gaseous fuel to a fuel manifold.

The method of any preceding clause, wherein mixing the gaseous fuel with the inert gas occurs within a supply line coupled to the fuel injector.

The method of any preceding clause, further comprising impinging the gaseous fuel on the inert gas within the supply line.

The method of any preceding clause, wherein mixing the gaseous fuel with the inert gas further comprises impinging the gaseous fuel on the inert gas.

The method of any preceding clause, wherein mixing the gaseous fuel with the inert gas occurs within the fuel injector.

The method of any preceding clause, further comprising extracting the inert gas from atmospheric air.

The method of any preceding clause, further comprising extracting the inert gas from engine exhaust gases.

The method of any preceding clause, further comprising controlling, with a controller, the supplying of the inert gas and the supplying of the gaseous fuel.

The method of any preceding clause, wherein the mixture of gaseous fuel and inert gas is a homogenous mixture.

The method of any preceding clause, further comprising supplying the mixture of gaseous fuel and inert gas to a supply of air provided from a swirler assembly positioned about the fuel injector.

The method of any preceding clause, wherein the gaseous fuel is non-diluent hydrogen.

The method of any preceding clause, wherein the mixture of gaseous fuel and inert gas includes at least 5% inert gas.

The method of any preceding clause, further comprising mixing the mixture of gaseous fuel and inert gas with a supply of air, and wherein a ratio of the mixture of gaseous fuel and inert gas to air is greater than or equal to 1: 1 and less than and less than or equal to 8: 1.

## Claims

1. A method of supplying a fuel to a combustor (34, 322, 404, 504) for a turbine engine (10, 400, 500), the method comprising:
supplying a gaseous fuel (Fg) from a gaseous fuel supply (152, 202, 302);
supplying an inert gas (Ig) from an inert gas supply (154, 204, 304);
mixing the gaseous fuel (Fg) with the inert gas (Ig) to form a mixture of gaseous fuel and inert gas (M); and
supplying the mixture (M) from a fuel injector (32, 210, 312, 410, 512) to the combustor (34, 322, 404, 504).

2. The method of claim 1, wherein the mixing of the gaseous fuel (Fg) and the inert gas (Ig) occurs within a mixing manifold (160).

3. The method of any one of claims 1 or 2, further comprising supplying the mixture (M) to a fuel manifold (162).

4. The method of any one of claims 1 to 3, wherein the gaseous fuel (Fg) and the inert gas (Ig) are mixed within a supply line (212) coupled to the fuel injector (210), the supply line (212) comprising a mixing passage (236).

5. The method of claim 4, wherein the mixing comprises impinging the gaseous fuel (Fg) on the inert gas (Ig) within the mixing passage (236) via a set of gaseous fuel outlets (238) and a set of inert gas outlets (240) aligned to intersect.

6. The method of any one of claims 1 to 5, wherein the mixing of the gaseous fuel (Fg) and the inert gas (Ig) occurs within the fuel injector (312), and the fuel injector (312) comprises a swirler assembly (326) having an axial swirler (328) and a radial swirler (330) disposed about a fuel nozzle (320).

7. The method of any one of claims 1 to 6, further comprising extracting the inert gas (Ig) from atmospheric air (508) or from engine exhaust gases (E) using an inert gas retrieval device (408, 510).

8. The method of any one of claims 1 to 7, further comprising controlling, with a controller (164), the supplying of the gaseous fuel (Fg) and the supplying of the inert gas (Ig).

9. The method of any one of claims 1 to 8, wherein the mixture (M) is a homogenous mixture.

10. The method of any one of claims 1 to 9, wherein the inert gas (Ig) comprises carbon dioxide (CO₂), nitrogen (N₂), argon (Ar), helium (He), or combinations thereof.

11. The method of any one of claims 1 to 10, wherein the gaseous fuel (Fg) is non-diluent hydrogen.

12. The method of any one of claims 1 to 11, wherein the mixture (M) comprises at least 5% inert gas (Ig) by volume.

13. The method of any one of claims 1 to 12, wherein the mixture (M) is further mixed with a supply of air (A) provided from the swirler assembly (326), and a ratio of the mixture (M) to the air (A) is greater than or equal to 1:1 and less than or equal to 8:1.

14. The method of any one of claims 1 to 13, wherein the fuel manifold (162), mixing manifold (160), or inert gas retrieval device (408, 510) are operatively connected to the controller (164) for active control of flow conditions during different engine states.

15. The method of any one of claims 1 to 14, wherein the set of gaseous fuel outlets (238) and the set of inert gas outlets (240) in the mixing passage (236) have a decreasing spacing in the flow direction to enhance mixing.
